## Europäisches Patentamt

## European Patent Office

## Office européen des brevets

(19)

(11) Veröffentlichungsnummer: **0 111 682**
**B1**

(12) # EUROPÄISCHE PATENTSCHRIFT

(45) Veröffentlichungstag der Patentschrift:
03.02.88

(21) Anmeldenummer: 83110595.2

(22) Anmeldetag: 24.10.83

(51) Int. Cl.⁴: **C 08 L 75/04,** C 08 J 5/18,
C 08 G 18/66

(54) Gut entformbare und nicht blockende, thermoplastische Polyurethan-Elastomere, Verfahren zu deren Herstellung und deren Verwendung.

(30) Priorität: 11.11.82 DE 3241666

(43) Veröffentlichungstag der Anmeldung:
27.06.84 Patentblatt 84/26

(45) Bekanntmachung des Hinweises auf die Patenterteilung:
03.02.88 Patentblatt 88/5

(84) Benannte Vertragsstaaten:
AT BE CH DE FR GB IT LI NL SE

(56) Entgegenhaltungen:
DD-B-143 370
DE-A-2 610 237
GB-A-2 021 603

PATENT ABSTRACTS OF JAPAN Band 7, Nr. 285, 20.
Dezember 1983, Seite (C-201) (1430); & JP-A-58-
164637 (DAINIPPON) 29-09-1983

Die Akte enthält technische Angaben, die nach
dem Eingang der Anmeldung eingereicht wurden
und die nicht in dieser Patentschrift enthalten sind.

(73) Patentinhaber: BASF Aktiengesellschaft, Carl-
Bosch- Strasse 8, D-6700 Ludwigshafen (DE)

(72) Erfinder: Zeitler, Gerhard, Dr., Lessingstrasse 11,
D-6717 Hessheim (DE)
Erfinder: Werner, Frank, Dr., Waldstrasse 38 b,
D-6730 Neustadt (DE)
Erfinder: Bittner, Gerhard, Dr., Lohneufer 36,
D-2840 Diepholz 1 (DE)
Erfinder: Rombrecht, Hans Malte, Dr., D-2844
Quernheim 93 (DE)

EP 0 111 682 B1

## Beschreibung

Thermoplastische Polyurethan-Elastomere, im folgenden abgekürzt TPU genannt, sind seit langem bekannt. Ihre technische Bedeutung beruht auf der Kombination hochwertiger mechanischer Eigenschaften mit den Vorteilen der kostengünstigen Thermoplastverarbeitung. Durch die Verwendung unterschiedlicher chemischer Aufbaukomponenten läßt sich eine große Variationsbreite mechanischer Eigenschaften erzielen. Eine Übersicht über TPU, ihre Eigenschaften und Anwendungen wird in Kunststoffe, 68 (1978), Seiten 819-825 gegeben.

TPU können kontinuierlich oder diskontinuierlich nach verschiedenen Verfahren hergestellt werden. Als die bekanntesten werden das sogenannte Bandverfahren und das Extruderverfahren auch technisch genutzt.

Nach der GB-A-1 057 018 wird aus einer im wesentlichen linearen Polyhydroxylverbindung und überschüssigem organischen Diisocyanat ein Prepolymeres hergestellt, das über eine Dosierpumpe einem Mischkopf zugeführt und dort mit einer bestimmten Menge eines niedermolekularen Diols gemischt wird. Das erhaltene Reaktionsgemisch wird auf ein Förderband gebracht und durch einen auf 70 bis 130° C erhitzten Ofen geführt, bis es erstarrt. Das Reaktionsprodukt wird danach zerkleinert, bei Temperaturen bis 120° C 6 bis 40 Stunden getempert und kann so z. B. mit Spritzgußmaschinen zu Formkörpern verarbeitet werden. Das Nachtempern und das Zerkleinern sind hierbei Arbeitsgänge, die das Bandverfahren wirtschaftlich belasten.

Beim Extruderverfahren, das z. B. in der DE-A-20 59 570 (US-A-3 642 964) beschrieben wird, werden die Aufbaukomponenten direkt in den Extruder eingebracht und die Reaktion im Extruder unter bestimmten Verfahrensbedingungen durchgeführt. Das gebildete Polyurethan-Elastomere wird in den thermoplastischen Zustand übergeführt, als Strang extrudiert, in einer Inertgasatmosphäre bis zum Erstarren abgekühlt und zerkleinert. Nachteilig an diesem Verfahren ist, daß die erhaltenen TPU mit Shore-A-Härten bis zu 95 für die Herstellung von Folien oder von feinen Profilen und Schläuchen nicht geeignet sind. Vielfach blocken und kleben derartige Folien so stark, daß eine Weiterverarbeitung nicht möglich ist. Obwohl die Polyurethanfolien recht gute mechanische Eigenschaften besitzen, haben sie noch keine breite Anwendung gefunden.

Die Herstellung von Spritzgußartikeln aus TPU im Shore-A-Härtebereich 80 bis 85 und niedriger bereitet wegen deren schlechter Entformbarkeit ebenfalls Große Schwierigkeiten. Die Mitverwendung von sogenannten Entformungshilfsmitteln bringt hierbei nur eine Verbesserung.

Die Aufgabe der vorliegenden Erfindung bestand darin, TPU zu entwickeln, die die obengenannten Nachteile nicht aufweisen und die zu nicht blockenden und klebenden Polyurethanfolien oder gut entformbaren Spritzgußformteilen verarbeitet werden können.

Diese Aufgabe konnte überraschenderweise gelöst werden mit gut entformbaren und nicht blockenden thermoplastischen Polyurethan-Elastomeren, die eine Mischung von thermoplastischen Polyurethanen mit unterschiedlichem Urethangruppengehalt enthalten, und die hergestellt wurde durch Umsetzung von

(a) organischen Diisocyanaten,
(b) Polyhydroxylverbindungen mit Molekulargewichten von 500 bis 8000 und
(c) Diolen mit Molekulargewichten von 60 bis 400 in einem Äquivalenzverhältnis von NCO-Gruppen der Diisocyanate (a) zur Summe der Hydroxylgruppen der Komponenten (b) und (c) von 1 : 0,85 bis 1 : 1,20, und dadurch gekennzeichnet sind, daß die Mischung im wesentlichen besteht aus

A) 50 bis 99,5 Gew.-Teilen eines thermoplastischen Polyurethan-Elastomeren A mit einem Gehalt an Urethangruppen von 10 bis 50 Gew.-% und einem Schmelzindex bei 190° C von 0,1 bis 100 und

B) 0,5 bis 50 Gew.-Teilen eines freie Isocyanatgruppen enthaltenden thermoplastischen Polyurethan-Elastomeren B mit einem Gehalt an Urethangruppen von 20 bis 60 Gew.-% und einem Schmelzindex bei 190° C von 10 bis 1000, bei dessen Herstellung nur 50 bis 90 Mol % der Diisocyanate (a) umgesetzt wurden mit der Maßgabe daß der Urethangruppengehalt des Polyurethan-Elastomeren B stets um mindestens 10 Gew.-% größer ist als der von A und der Schmelzindex des Polyurethan-Elastomeren B bei der Schmelztemperatur gleich oder größer als der von A ist.

Gegenstände der Erfindung sind ferner ein Verfahren zur Herstellung der gut entformbaren und nicht blockenden thermoplastischen Polyurethan-Elastomeren nach Anspruch 4 und die Verwendung der Produkte zur Herstellung von Folien oder Spritzgußteilen nach den Ansprüchen 7 bzw. 8.

Die Schmelzviskosität von TPU steigt wie die Härte mit dem Gehalt an Urethangruppen an, während der Schmelzindex abnimmt. Man kann daher TPU mit einem unterschiedlichen Urethangruppengehalt in der Schmelze üblicherweise nur dann mischen, wenn der Anteil an TPU mit einem höheren Urethangruppengehalt überwiegt. Harte TPU können somit mit einem geringen Anteil an weichen TPU modifiziert werden.

Überraschenderweise zeigte sich jedoch, daß man weiche TPU vorteilhafterweise mit harten TPU modifizieren kann, wenn die Schmelzviskosität des härteren TPU gleich oder niedriger oder der Schmelzindex der härteren TPU gleich oder größer ist bei der Schmelztemperatur als der des weicheren TPU-Basismaterials.

Die erfindungsgemäß verwendbaren TPU A

und B können durch Umsetzung von
  a) organischen Diisocyanaten,
  b) Polyhydroxylverbindungen mit
Molekulargewichten von 500 bis 8000 und
  c) Kettenverlängerungsmitteln mit
Molekulargewichten von 60 bis 400 in Gegenwart
von
  d) Katalysatoren und gegebenenfalls
  e) Hilfsmitteln und/oder
  f) Zusatzstoffen
  bei erhöhten Temperaturen hergestellt werden.
  Zu den Aufbaukomponenten (a) bis (d) und
gegebenenfalls (e) und/oder (f) ist folgendes
auszuführen:
  a) Als organische Diisocyanate (a) kommen
beispielsweise aliphatische, cycloaliphatische
und vorzugsweise aromatische Diisocyanate in
Betracht. Im einzelnen seien beispielhaft
genannt: aliphatische Diisocyanate, wie
Hexamethylen-diisocyanat, cycloaliphatische
Diisocyanate, wie Isophoron-diisocyanat, 1,4-
Cyclohexan-diisocyanat, 1-Methyl-2,4- und -2,6-
cyclohexan-diisocyanat sowie die
entsprechenden Isomerengemische, 4,4'-, 2,4'-
und 2,2'-Dicyclohexyl-methan-diisocyanat sowie
die entsprechenden Isomerengemische und
vorzugsweise aromatische Diisocyanate, wie 2,4-
Toluylen-diisocyanat, Gemische aus 2,4- und 2,6-
Toluylen-diisocyanat, 4,4'-, 2,4'- und 2,2'-
Diphenylmethan-diisocyanat, Gemische aus 2,4'-
und 4,4'-Diphenylmethan-diisocyanat,
urethanmodifizierte flüssige 4,4'- und/oder 2,4'-
Diphenylmethan-diisocyanate, 4,4'-Diisocyanato-
diphenylethan-1,2, Gemische aus 4,4'-, 2,4'- und
2,2'-Diisocyanato-diphenylethan-1,2,
vorteilhafterweise solche mit einem 4,4'-
Diisocyanato-diphenylethan-1,2-Gehalt von
mindestens 95 Gew.-% und 1,5-Naphthylendiisocyanat. Vorzugsweise verwendet werden
Hexamethylen-diisocyanat, Isophoron-
diisocyanat, Diphenylmethan-diisocyanat-
Isomerengemische mit einem 4,4'-
Diphenylmethan-diisocyanatgehalt von größer
als 96 Gew.-% und insbesondere 4,4'-
Diphenylmethan-diisocyanat und 1,5-Naphthylendiisocyanat.
  b) Als höhermolekulare
Polyhydroxylverbindungen (b) mit
Molekulargewichten von 500 bis 8000 eignen sich
vorzugsweise Polyetherole und insbesondere
Polyesterole. In Betracht kommen jedoch auch
andere hydroxylgruppenhaltige Polymere,
beispielsweise Polyacetale, wie
Polyoxymethylene und vor allem
wasserunlösliche Formale, z. B.
Polybutandiolformal und Polyhexandiolformal,
und Polycarbonate, insbesondere solche aus
Diphenylcarbonat und Hexandiol-1,6, hergestellt
durch Umesterung. Die
Polyhydroxylverbindungen müssen zumindest
überwiegend linear, d.h. im Sinne der
Isocyanatreaktion difunktionell aufgebaut sein.
Die genannten Polyhydroxylverbindungen können
als Einzelkomponenten oder in Form von
Mischungen zur Anwendung kommen.

  Geeignete Polyetherole können dadurch
hergestellt werden, daß man ein oder mehrere
Alkylenoxide mit 2 bis 4 Kohlenstoffatomen im
Alkylenrest mit einem Startermolekül, das zwei
aktive Wasserstoffatome gebunden enthält,
umsetzt. Als Alkylenoxide seien z. B. genannt
Ethylenoxid, 1,2-Propylenoxid, Epichlorhydrin und
1,2- und 2,3-Butylenoxid. Vorzugsweise
Anwendung finden Ethylenoxid und Mischungen
aus 1,2-Propylenoxid und Ethylenoxid. Die
Alkylenoxide können einzeln, alternierend
nacheinander oder als Mischungen verwendet
werden. Als Startermoleküle kommen
beispielsweise im Betracht: Wasser,
Aminoalkohole, wie N-Alkyl-diethanol-amine,
beispielsweise N-Methyl-diethanolamin und
Diole, wie Ethylenglykol, 1,3-Propylenglykol,
Butandiol-1,4 und Hexandiol-1,6. Gegebenenfalls
können auch Mischungen von Startermolekülen
eingesetzt werden.
  Geeignete Polyetherole sind ferner die
hydroxylgruppenhaltigen
Polymerisationsprodukte des Tetrahydrofurans.
  Vorzugsweise verwendet werden
hydroxylgruppenhaltiges Polytetrahydrofuran
und Polyetherole aus 1,2-Propylenoxid und
Ethylenoxid, in denen mehr als 50 %,
vorzugsweise 60 bis 80 % der OH-Gruppen
primäre Hydroxylgruppen sind und bei denen
zumindest ein Teil des Ethylenoxids als
endständiger Block angeordnet ist.
  Solche Polyetherole können erhalten werden,
indem man z. B. an das Startermolekül zunächst
das 1,2-Propylenoxid und daran anschließend das
Ethylenoxid polymerisiert oder zunächst das
gesamte 1,2-Propylenoxid im Gemisch mit einem
Teil des Ethylenoxids copolymerisiert und den
Rest des Ethylenoxids anschließend
anpolymerisiert oder schrittweise zunächst einen
Teil des Ethylenoxids, dann das gesamte 1,2-
Propylenoxid und dann den Rest des
Ethylenoxids an das Startermolekül
anpolymerisiert.
  Die im wesentlichen linearen Polyetherole
besitzen Molekulargewichte von 500 bis 8 000,
vorzugsweise 600 bis 6 000 und insbesondere 800
bis 3 500. Sie können sowohl einzeln als auch in
Form von Mischungen untereinander zur
Anwendung kommen.
  Geeignete Polyesterole können beispielsweise
aus Dicarbonsäuren mit 2 bis 12
Kohlenstoffatomen und mehrwertigen Alkoholen
hergestellt werden. Als Dicarbonsäuren kommen
beispielsweise in Betracht: aliphatische
Dicarbonsäuren, wie Bernsteinsäure, Glutarsäure,
Adipinsäure, Korksäure, Azelainsäure und
Sebacinsäure und aromatische Dicarbonsäuren,
wie Phthalsäure, Isophthalsäure und
Terephthalsäure. Die Dicarbonsäuren können
einzeln oder als Gemische, z. B. in Form einer
Bernstein-, Glutar- und Adipinsäuremischung,
verwendet werden. Zur Herstellung der
Polyesterole kann es gegebenenfalls vorteilhaft
sein, anstelle der Carbonsäuren die
entsprechenden Carbonsäurederivate, wie Carbonsäureester mit 1 bis 4 Kohlenstoffatomen im Alkoholrest, Carbonsäureanhydride oder Carbonsäurechloride zu verwenden. Beispiele für mehrwertige Alkohole sind Glykole mit 2 bis 10, vorzugsweise 2 bis 6 Kohlenstoffatomen, wie Ethylenglykol, Diethylenglykol, Butandiol-1,4, Pentandiol-1,5, Hexandiol-1,6, Decandiol-1,10, 2,2-Dimethyl-propandiol-1,3, Propandiol-1,3 und Dipropylenglykol. Je nach den gewünschten Eigenschaften können die mehrwertigen Alkohole allein oder gegebenenfalls in Mischungen untereinander verwendet werden.

Geeignet sind ferner Ester der Kohlensäure mit den genannten Diolen, insbesondere solchen mit 4 bis 6 Kohlenstoffatomen, wie Butandiol-1,4 und/oder Hexandiol-1,6, Kondensationsprodukte von ω-Hydroxycarbonsäuren, beispielsweise ω-Hydroxycapronsäure und vorzugsweise Polymerisationsprodukte von Lactonen, beispielsweise gegebenenfalls substituierten ε-Caprolactonen.

Als Polyesterole vorzugsweise verwendet werden Ethandiol-polyadipate, 1,4-Butandiolpolyadipate, Ethandiol-1,4-butandiol-polyadipate, 1,6-Hexandiol-neopentylglykol-polyadipate, 1,6-Hexandiol-1,4-butandiol-polyadipate und Polycaprolactone.

Die Polyesterole besitzen Molekulargewichte von 500 bis 6 000, vorzugsweise von 800 bis 3 500.

c) Als Diole (c) mit Molekulargewichten von 60 bis 400, vorzugsweise 60 bis 300, kommen vorzugsweise aliphatische Diole mit 2 bis 12 Kohlenstoffatomen, vorzugsweise mit 2, 4 oder 6 Kohlenstoffatomen, wie z. B. Ethandiol, Hexandiol-1,6, Diethylenglykol, Dipropylenglykol und insbesondere Butandiol-1,4 in Betracht. Geeignet sind jedoch auch Diester der Terephthalsäure mit Glykolen mit 2 bis 4 Kohlenstoffatomen, wie z. B. Terephthalsäure-bis-ethylenglykol oder -butandiol-1,4 und Hydroxyalkylenether des Hydrochinons, wie z. B. 1,4-Di-(β-hydroxyethyl)-hydrochinon.

d) Geeignete Katalysatoren, welche insbesondere die Reaktion zwischen den NCO-Gruppen der Diisocyanate (a) und den Hydroxylgruppen der Aufbaukomponenten (b) und (c) beschleunigen, sind die nach dem Stand der Technik bekannten und üblichen tertiären Amine, wie z. B. Triethylamin, Dimethylcyclohexylamin, N-Methylmorpholin, N,N'-Dimethyl-piperazin, Diazabicyclo-(2,2,2)-octan und ähnliche sowie insbesonders organische Metallverbindungen wie Titansäureester, Eisenverbindungen, Zinnverbindungen, z. B. Zinndiacetat, Zinndioctoat, Zinndilaurat oder die Zinndialkylsalze aliphatischer Carbonsäuren wie Dibutylzinndiacetat, Dibutylzinndilaurat oder ähnliche. Die Katalysatoren werden üblicherweise in Mengen von 0,001 bis 0,1 Gew.-Teilen pro 100 Gew.-Teilen Polyhydroxylverbindung eingesetzt.

Neben Katalysatoren können den Aufbaukomponenten auch Hilfsmittel (e) und/oder Zusatzstoffe (f) einverleibt werden.

Genannt seien beispielsweise Gleitmittel, Inhibitoren, Stabilisatoren gegen Hydrolyse, Licht, Hitze oder Verfärbung, Flammschutzmittel, Farbstoffe, Pigmente, anorganische und/oder organische Füllstoffe und Verstärkungsmittel.

Nähere Angaben über die obengenannten Hilfsmittel und Zusatzstoffe sind der Fachliteratur, beispielsweise der Monographie von J.H. Saunders und K.C. Frisch, "High Polymers", Band XVI, Polyurethane, Teil 1 und 2, Verlag Interscience Publishers, 1962 bzw. 1964, oder der DE-A-29 01 774 zu entnehmen.

Zur Herstellung der TPU werden die Aufbaukomponenten (a), (b) und (c) in Gegenwart von Katalysatoren (d) und gegebenenfalls Hilfsmitteln (e) und/oder Zusatzstoffen (f) in solchen Mengen zur Reaktion gebracht, daß das Äquivalenzverhältnis von NCO-Gruppen der Diisocyanate zur Summe der Hydroxylgruppen der Komponenten (b) und (c) 1 : 0,85 bis 1,20, vorzugsweise 1 : 0,95 bis 1 : 1,05 und insbesondere ungefähr 1 : 1,02 beträgt.

Zur Einstellung von Härte und Schmelzindex können die Aufbaukomponenten (b) und (c) in relativ breiten molaren Verhältnissen variiert werden, wobei die Härte und Schmelzviskosität mit zunehmendem Gehalt an Kettenverlängerungsmittel (c) ansteigt, während der Schmelzindex abnimmt.

Die erfindungsgemäß verwendbaren weichen TPU A mit einem Gehalt an Urethangruppen von 10 bis 50 Gew.-%, vorzugsweise 15 bis 40 Gew.-%, einer Shore-A-Härte von ungefähr 60 bis 95, vorzugsweise von 70 bis 90 und einem Schmelzindex bei 190°C von 0,1 bis 100, vorzugsweise 1 bis 40, können hergestellt werden nach dem Band- oder Extruderverfahren durch kontinuierliches Mischen der Aufbaukomponenten, Ausreagieren lassen der Reaktionsmischung auf einem Trägerband oder im Extruder bei Temperaturen von 60 bis 250°C und anschließendes Granulieren der erhaltenen TPU.

Die erfindungsgemäß verwendbaren harten TPU B mit einem Gehalt an Urethangruppen von 20 bis 60 Gew.-%, vorzugsweise 25 bis 50 Gew.-%, einer Shore-A-Härte von ungefähr 70 bis 98, vorzugsweise von 80 bis 95 und einem Schmelzindex bei 190°C von 10 bis 1000, vorzugsweise 30 bis 300 werden vorzugsweise nach dem Bandverfahren hergestellt. Hierzu werden die Aufbaukomponenten (a) bis (d) und gegebenenfalls (e) und/oder (f) bei Temperaturen oberhalb des Schmelzpunktes der Aufbaukomponenten (a) bis (c) mit Hilfe eines Mischkopfes kontinuierlich gemischt. Die Reaktionsmischung wird auf einen Träger, vorzugsweise ein Förderband, aufgebracht und mit einer Geschwindigkeit von 1 bis 20 m/Minute, vorzugsweise von 4 bis 10 m/Minute durch eine temperierte Zone von 1 bis 20 m, vorzugsweise von 3 bis 10 m Länge geführt. Die Reaktionstemperatur in der temperierten Zone beträgt 60 bis 200°C, vorzugsweise 100 bis 180°C. In Abhängigkeit vom Diisocyanatanteil in der Reaktionsmischung wird die Reaktion durch Kühlen oder Heizen so gesteuert, daß bis zu 90 Mol.%, vorzugsweise bis zu 80 Mol.% Diisocyanat umgesetzt werden und die Reaktionsmischung bei der gewählten Reaktionstemperatur erstarrt. Aufgrund des freien Polyisocyanatgehalts der erstarrten Produkte, der 10 bis 50 Mol.%, vorzugsweise 20 bis 30 Mol.% beträgt, werden harte TPU B mit sehr niedriger Schmelzviskosität bzw. hohem Schmelzindex erhalten.

Zur Herstellung der gut entformbaren und nicht blockenden TPU werden 50 bis 99,5 Gew.-Teile, vorzugsweise 70 bis 95 Gew.-Teile der TPU A und 0,5 bis 50 Gew.-Teile, vorzugsweise 5 bis 30 Gew.-Teile der TPU B mit der Maßgabe, daß der Urethangruppengehalt des Polyurethan-Elastomeren B stets um mindestens 10 Gew.-% größer ist als der von A und der Schmelzindex des Polyurethan-Elastomeren B bei der Schmelztemperatur gleich oder größer als der von A ist, bei Temperaturen von 140 bis 250°C, vorzugsweise von 190 bis 220°C in für die thermoplastische Verarbeitung von Kunststoffen üblichen Vorrichtungen, wie z. B. Knetern und vorzugsweise Extrudern zusammengeschmolzen und anschließend granuliert, wobei auch in diesem Verfahrensabschnitt der Schmelze gegebenenfalls Hilfsmittel und/oder Zusatzstoffe einverleibt werden können. Die erfindungsgemäßen TPU, die Härten nach Shore A von 65 bis 96 und einen Schmelzindex bei 190°C von 0,5 bis 200 besitzen, eignen sich für die Herstellung von Folien nach dem Blasverfahren sowie für die Breitschlitzextrusion. Die erhaltenen Folien blocken nicht und zeigen einen trockenen Griff. Die Produkte können ferner mit Hilfe der Spritzgußtechnik zu Formkörpern verarbeitet werden, wobei auch Formkörper mit komplizierten Raumformen leicht und problemlos entformt werden können.

**Beispiel 1**

80 Gew.-Teile eines TPU (A) aus 1,4-Butandiolpolyadipat mit einem Molekulargewicht von 2000, Butandiol-1,4 als Kettenverlängerer und 4,4'-Diisocyanato-diphenylmethan mit einem Gehalt an Urethangruppen von 30 Gew.-% und einem Schmelzindex nach DIN 53 735 bei 190°C und einem Auflagegewicht von 21 kg von 2 wurde über einen Einwellenextruder bei 190°C mit 20 Gew.-Teilen eines TPU (B) bestehend aus dem gleichen Komponenten wie (A) aber mit einem Gehalt von Urethangruppen von 40,3 Gew.-% und einem Schmelzindex bei 190°C von 24 in der Schmelze bei einer Temperatur von 205°C, gemischt und zu Granulat verarbeitet.

Aus dem Granulat wurde in üblicher Weise eine Blasfolie hergestellt. Die Folie blockte nicht und zeigte einen trockenen Griff.

**Vergleichsbeispiele A und B**

Verfuhr man analog den Angaben von Beispiel 1, verwendete jedoch anstelle des TPU B mit einem Schmelzindex von 24 ein solches vom Schmelzindex 0,1, so konnte dieses nicht in das TPU A eingeschmolzen werden.

Eine nur aus TPU A gemäß Beispiel 1 nach dem Blasverfahren hergestellte Folie verklebte so stark, daß sie nicht mehr von der Vorratsrolle abgespult werden konnte.

**Beispiel 2**

90 Gew.-Teile eines TPU (A) mit einem Gehalt an Urethangruppen von 35 Gew.-%, einer Härte nach Shore A von 83 und einem Schmelzindex bei 190°C und einem Auflagegewicht von 21,6 kg von 1,5 wurden mit 10 Gew.-Teilen eines TPU (B) mit einem Gehalt an Urethangruppen von 45 Gew.-%, einer Härte nach Shore A von 95 und einem Schmelzindex unter den obengenannten Bedingungen von 120 in einem Extruder aufgeschmolzen und bei 200°C verschmolzen. Die Mischung wurde in bekannter Weise auf einer Spritzgußmaschine zu Formkörpern verspritzt, wobei die Formkörper bereits nach 20 Sekunden entformt werden konnten.

Durch den Zusatz des TPU (B) wurde die Härte des erhaltenen Endprodukts schwach auf Shore A 85 erhöht. Die mechanischen Eigenschaften bleiben innerhalb der Fehlergrenzen der Meßmethoden unverändert.

**Vergleichsbeispiele C und D**

Ein aus TPU (A) gemäß Beispiel 2 hergestellter Formkörper konnte erst nach 2 Minuten entformt werden.

Wurde ein TPU (A) mit einer Shore-A-Härte von 85 hergestellt und ohne Zusatz eines TPU (B) zu Formkörpern verarbeitet, so ergaben sich gleich schlechte Entformungseigenschaften.

**Beispiel 3**

70 Gew.-Teile eines TPU (A) mit einem Gehalt an Urethangruppen von 22 Gew.-%, einer Härte nach Shore A von 65 und einem Schmelzindex bei 190°C und einem Auflagegewicht von 21,6 kg von 31 wurden mit 30 Gew.-Teilen eines TPU (B) mit einem Gehalt an Urethangruppen von 35 Gew.-%, einer Härte nach Shore A von 85 und einem Schmelzindex unter den genannten Bedingungen von 36 in einem Extruder bei 200°C verschmolzen. Aus dem erhaltenen TPU wurde eine Blasfolie hergestellt, die bei einer Folienstärke von 100 µm bei einer Dehnung von 550 % eine Reißfestigkeit von 70 N/mm$^2$ aufwies.

Aus dem reinen TPU (A) konnte keine Blasfolie hergestellt werden.

**Patentansprüche**

1. Gut entformbare und nicht blockende, thermoplastische Polyurethan-Elastomere, enthaltend eine Mischung von thermoplastischen Polyurethanen mit unterschiedlicher Urethangruppengehalt, die hergestellt wurden durch Umsetzung von

(a) organischen Diisocyanaten,
(b) Polyhydroxylverbindungen mit Molekulargewichten von 500 bis 8000 und
(c) Diolen mit Molekulargewichten von 60 bis 400

in einem Äquivalenzverhältnis von NCO-Gruppen der Diisocyanate (a) zur Summe der Hydroxylgruppen der Komponenten (b) und (c) von 1 : 0,85 bis 1 : 1,20, dadurch gekennzeichnet, daß die Mischung im wesentlichen besteht aus

A) 50 bis 99,5 Gew.-Teilen eines thermoplastischen Polyurethan-Elastomeren A mit einem Gehalt an Urethangruppen von 10 bis 50 Gew.-% und einem Schmelzindex bei 190°C von 0,1 bis 100 und

B) 0,5 bis 50 Gew.-Teilen eines freie Isocyanatgruppen enthaltenden, thermoplastischen Polyurethan-Elastomeren B mit einem Gehalt an Urethangruppen von 20 bis 60 Gew.-% und einem Schmelzindex bei 190°C von 10 bis 1000, bei dessen Herstellung nur 50 bis 90 Mol % der Diisocyanate (a) umgesetzt wurden, mit der Maßgabe, daß der Urethangruppengehalt des Polyurethan-Elastomeren B stets um mindestens 10 Gew.-% größer ist als der von A und der Schmelzindex des Polyurethan-Elastomeren B bei der Schmelztemperatur gleich oder größer als der von A ist.

2. Thermoplastische Polyurethan-Elastomere nach Anspruch 1, dadurch gekennzeichnet, daß das thermoplastische Polyurethan-Elestomere A eine Härte nach Shore A von 60 bis 95 und die Komponente B eine solche von 70 bis 98 besitzt, wobei die Härte der Komponente B größer sein muß als die von A.

3. Thermoplastische Polyurethan-Elastomere nach Anspruch 1, dadurch gekennzeichnet, daß das Polyurethan-Elastomere B nach dem Bandverfahren hergestellt ist.

4. Verfahren zur Herstellung von gut entformbaren und nicht blockenden thermoplastischen Polyurethan-Elastomeren durch Mischen von thermoplastischen Polyurethanen mit unterschiedlichem Urethangruppengehalt, die hergestellt wurden durch Umsetzung von

(a) organischen Diisocyanaten,
(b) Polyhydroxylverbindungen mit Molekulargewichten von 500 bis 8000 und
(c) Diolen mit Molekulargewichten von 60 bis 400

in einem Äquivalenzverhältnis von NCO-Gruppen der Diisocyanate (a) zur Summe der Hydroxylgruppen der Komponenten (b) und (c) von 1 : 0,85 bis 1 : 1,20, dadurch gekennzeichnet, daß man

A) 50 bis 99,5 Gew.-Teile eines thermoplastischen Polyurethan-Elastomeren A mit einem Gehalt an Urethangruppen von 10 bis 50 Gew.-% und einem Schmelzindex bei 190°C von 0,1 bis 100 und

B) 0,5 bis 50 Gew.-Teile eines freie Isocyanatgruppen enthaltenden thermoplastischen Polyurethan-Elastomeren B mit einem Gehalt an Urethangruppen von 20 bis 60 Gew.-% und einem Schmelzindex bei 190°C von 10 bis 1000, bei dessen Herstellung nur 50 bis 90 Mol % der Diisocyanate (a) umgesetzt wurden, mit der Maßgabe, daß der Urethangruppengehalt des Polyurethan-Elastomeren B stets um mindestens 10 Gew.-% größer ist als der von A und der Schmelzindex des Polyurethan-Elastomeren B bei der Schmelztemperatur gleich oder größer als der von A ist,

bei Temperaturen von 140 bis 250°C zusammenschmilzt und die Schmelze danach granuliert.

5. Verfahren nach Anspruch 4, dadurch gekennzeichnet, daß man die Polyurethan-Elastomeren A und B in einem Extruder zusammenschmilzt und anschließend granuliert.

6. Verfahren nach Anspruch 4, dadurch gekennzeichnet, daß die thermoplastischen Polyurethan-Elastomeren A und B hergestellt worden sind aus

a) aromatischen Diisocyanaten, vorzugsweise 4,4'-Diphenyl-methan-diisocyanat,

b) im wesentlichen linearen Polyhydroxylverbindungen, vorzugsweise Polyalkylenglykolpolyadipaten mit 2 bis 6 C-Atomen im Alkylenrest und Molekulargewichten von 500 bis 8000, oder hydroxylgruppenhaltigem Polytetrahydrofuran mit einem Molekulargewicht von 500 bis 8000 und

c) Butandiol-1,4

in Gegenwart von

d) Katalysatoren und gegebenenfalls
e) Hilfsmitteln und/oder
f) Zusatzstoffen.

7. Verwendung von thermoplastischen Polyurethan-Elastomeren nach Anspruch 1 zur Herstellung von Folien.

8. Verwendung von thermoplastischen Polyurethan-Elastomeren nach Anspruch 1 zur Herstellung von Spritzgußformteilen.

**Claims**

1. A nonblocking, thermoplastic polyurethane elastomer which is readily removable from the mold, contains a mixture of thermoplastic polyurethanes containing different amounts of urethane groups and has been prepared by reacting

(a) organic diisocyanates,

(b) polyhydroxy compounds having molecular weights of from 500 to 8,000 and

(c) diols having molecular weights of from 60 to 400 in a ratio such that the number of equivalents of NCO groups of the diisocyanates (a) to the number of equivalents of the sum of the hydroxyl groups of components (b) and (c) is from 1 : 0.85 to 1 : 1.2, wherein the mixture essentially consists of

A) from 50 to 99.5 parts by weight of a thermoplastic polyurethane elastomer A containing from 10 to 50 % by weight of urethane groups and having a melt flow index of from 0.1 to 100 at 190° C and

B) from 0.5 to 50 parts by weight of a thermoplastic polyurethane elastomer which contains free isocyanate groups and from 20 to 60 % by weight of urethane groups and has a melt flow index of 10 to 1,000 at 190° C, and in the preparation of which only from 50 to 90 mol % of the diisocyanates (a) have been converted, with the proviso that the content of urethane groups in the polyurethane elastomer B is never less than 10 % by weight higher than the content of urethane groups in A and the melt flow index of the polyurethane elastomer B at the melting point is equal to or greater than than of A.

2. A thermoplastic polyurethane elastomer as claimed in claim 1, wherein the Shore A hardness of the thermoplastic polyurethane elastomer A is from 60 to 95 and that of component B is from 70 to 98, and the hardness of component B must be greater than that of A.

3. A thermoplastic polyurethane elastomer as claimed in claim 1, wherein the polyurethane elastomer B is prepared by the belt method.

4. A process for the preparation of a nonblocking thermoplastic polyurethane elastomer by mixing thermoplastic polyurethanes containing different amounts of urethane groups, the said elastomer being readily removable from the mold and being prepared by reacting

(a) organic diisocyanates,

(b) polyhydroxy compounds having molecular weights of from 500 to 8,000 and

(c) diols having molecular weights of from 60 to 400 in a ratio such that the number of equivalents of NCO groups of the diisocyanates (a) to the number of equivalents of the sum of the hydroxyl groups of components (b) and (c) is from 1 : 0.85 to 1 : 1.20, wherein

A) from 50 to 99.5 parts by weight of a thermoplastic polyurethane elastomer A containing from 10 to 50 % by weight of urethane groups and having a melt flow index of from 0.1 to 100 at 190° C and

B) from 0.5 to 50 parts of a thermoplastic polyurethane elastomer B containing free isocyanate groups and from 20 to 60 % by weight of urethane groups and having a melt flow index of from 10 to 1,000 at 190° C, and in the preparation of which only from 50 to 90 mol % of the diisocyanates (a) have been converted, with the proviso that the content of urethane groups in the polyurethane elastomer B is never less than 10 % by weight higher than the content of urethane groups in A and the melt flow index of the polyurethane elastomer B at the melting point is equal to or greater than that of A,

are melted together at from 140 to 250° C and the melt is then granulated.

5. A process as claimed in claim 4, wherein the polyurethane elastomers A and B are melted together in an extruder and then granulated.

6. A process as claimed in claim 4, wherein the thermoplastic polyurethane elastomers A and B have been prepared from

a) aromatic diisocyanates, preferably 4,4'-diphenylmethane diisocyanate,

b) essentially linear polyhydroxy compounds, preferably polyalkylene glycol polyadipates where alkylene is of 2 to 6 carbon atoms, having molecular weights of from 500 to 6,000, or hydroxyl-containing polytetrahydrofuran having a molecular weight of from 500 to 8,000, and

c) butane-1,4-diol,
in the presence of
d) a catalyst and, if required,
e) assistants and/or
f) additives.

7. Use of a thermoplastic polyurethane elastomer as claimed in claim 1 for the productions of films.

8. Use of a thermoplastic polyurethane elastomer as claimed in claim 1 for the production of injection mold articles.

**Revendications**

1. Elastomères de polyuréthane thermoplastiques, facilement démoulables et exempts de blocking (non collants), contenant un mélange de polyuréthanes thermoplastiques à teneurs différentes en groupes uréthane qui ont été préparés par réaction de

(a) diisocyanates organiques,

(b) composés polyhydroxylés ayant des poids moléculaires de 500 à 8000 et

(c) diols ayant des poids moléculaires de 60 à 400 dans un rapport d'équivalence des groupes NCO des diisocyanates (a) à la somme des groupes hydroxyle des composants (b) et (c) de 1 : 0, 85 à 1 : 1, 20, caractérisés en ce que le mélange se compose essentiellement de

A) 50 à 99,5 parties en poids d'un élastomère de polyuréthane thermoplastique A ayant une teneur en groupes uréthane de 10 à 50 % en poids et un indice de fusion à 190° C de 0,1 à 100 et

B) 0, 5 à 50 parties en poids d'un élastomère de polyuréthane thermoplastique contenant des groupes isocyanates libres, ayant une teneur en groupes uréthane de 20 à 60 % en poids et un indice de fusion à 190° C de 10 à 1000, pour la préparation duquel on n'a fait réagir que 50 à 90 mol % des diisocyanates (a), avec cette condition que la teneur en groupes uréthane de l'élastomère de polyuréthane B soit toujours supérieure d'au moins 10 % en poids à celle de A et que l'indice de fusion de l'élastomère de polyuréthane B à la température de fusion soit égal ou supérieur à celui de A.

2. Elastomères de polyuréthane thermoplastiques selon la revendication 1, caractérisés en ce que l'élastomère de polyuréthane thermoplastique A a une dureté Shore A de 60 à 95 et le composant B en a une de 70 à 98, la dureté du composant B devant être supérieure à celle de A.

3. Elastomères de polyuréthane thermoplastiques selon la revendication 1, caractérisés en ce que l'élastomère de polyuréthane B est préparé par le procédé sur bande.

4. Procédé de préparation d'élastomères de polyuréthane thermoplastiques, facilement démoulables et exempts de blocking, par mélange de polyuréthanes thermoplastiques qui ont des teneurs différentes en groupes uréthane et qui ont été préparés par réaction de

(a) diisocyanates organiques,

(b) composés polyhydroxylés ayant des poids moléculaires de 500 à 8000 et

(c) diols ayant des poids moléculaires de 50 à 400

dans un rapport d'équivalence des groupes NCO des diisocyanates (a) à la somme des groupes hydroxyle des composants (b) et (c) de 1: 0,85 à 1 : 1,20, caractérisé en ce qu'on fond ensemble, à des températures de 140 à 250°C,

A) 50 à 99,5 parties en poids d'un élastomère de polyuréthane thermoplastique A ayant une teneur en groupes uréthane de 10 à 50 % en poids et un indice de fusion à 190°C de 0,1 à 100 et

B) 0,5 à 50 parties en poids d'un élastomère de polyuréthane thermoplastique contenant des groupes isocyanates libres, ayant une teneur en groupes uréthane de 20 à 60 % en poids et un indice de fusion à 190°C de 10 à 1000, pour la préparation duquel on n'a fait réagir que 50 à 90 mol % des diisocyanates (a), avec cette condition que la teneur en groupes uréthane de l'élastomère de polyuréthane B soit toujours supérieure d'au moins 10 % en poids à celle de A et que l'indice de fusion de l'élastomère de polyuréthane B à la température de fusion soit égal ou supérieur à celui de A, puis on granule le produit de fusion.

5. Procédé selon la revendication 4, caractérisé en ce qu'on fond ensemble les élastomères de polyuréthane A et B, puis on les granule dans une extrudeuse.

6. Procédé selon la revendication 4, caractérisé en ce que les élastomères de polyuréthane thermoplastiques A et B ont été préparés à partir de

a) diisocyanates aromatiques, de préférence diisocyanate de 4, 4'-diphénylméthane,

b) composés polyhydroxylés essentiellement linéaires, de préférence polyadipates de polyalkylèneglycols à 2-6 atomes de C dans le radical alkylène et à poids moléculaires de 500 à 6000 ou polytétrahydrofuranne contenant des groupes hydroxyle et ayant un poids moléculaire de 500 à 8000, et

c) butanediol-1,4,

en présence

d) de catalyseurs et, le cas échéant,

e) d'adjuvants et/ou

f) d'additifs.

7. Utilisation d'élastomères de polyuréthane thermoplastiques selon la revendication 1 pour la fabrication de feuilles.

8. Utilisation d'élastomères de polyuréthane thermoplastiques selon la revendication 1 pour la fabrication de pièces moulées par injection.